(19) Europäisches Patentamt European Patent Office Office européen des brevets

(11) **EP 4 715 416 A1**

(12) **DEMANDE DE BREVET EUROPEEN**

(43) Date de publication:
25.03.2026 Bulletin 2026/13

(21) Numéro de dépôt: 25200708.3

(22) Date de dépôt: 08.09.2025

(51) Classification Internationale des Brevets (IPC):
*G01S 5/02* *(2010.01)*

(52) Classification Coopérative des Brevets (CPC):
**G01S 5/0278; G01S 5/0218**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: 24.09.2024 FR 2410167

(71) Demandeur: **Commissariat à l'Energie Atomique et aux Energies Alternatives**
**75015 Paris (FR)**

(72) Inventeurs:
• **VILLIEN, Christophe**
**38054 GRENOBLE cedex 09 (FR)**
• **JEAMART, Marion**
**38054 GRENOBLE CEDEX 09 (FR)**
• **SBEITY, Ibrahim**
**38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **METHODE DE LOCALISATION D'UN NOEUD MOBILE ASSISTE PAR UN MODELE D'INTELLIGENCE ARTIFICIELLE ET UNE CARTE DE VISIBILITE**

(57) Méthode de localisation d'un nœud mobile assisté par un modèle d'intelligence artificielle et une carte de visibilité

Méthode de localisation d'un nœud mobile comprenant :
- Recevoir de N$\geq$ 4 mesures radiofréquence correspondant à des signaux échangés entre un nœud mobile à localiser et N nœuds de références,
- Recevoir une carte 3D de ladite zone,
- Déterminer un premier ensemble de résidus (MR) calculés pour plusieurs sous-ensembles de mesures comprenant chacun au plus N-1 mesures,
- Pour une pluralité de positions données :

i. Déterminer (902), un second ensemble (ML) d'indicateurs des trajets de propagation radio entre ladite position et celle de chaque nœud de référence,
ii. Exécuter (903) une phase d'inférence d'un modèle d'intelligence artificielle,
iii. Déterminer (904) une position provisoire du nœud mobile.
iv. Calculer (905) un score de cohérence entre la position provisoire et la position donnée , et

- déterminer la position finale du nœud mobile en fonction du score de cohérence.

[Fig. 2]

FIG.2

**Description**

L'invention concerne le domaine des méthodes et systèmes de localisation d'un nœud mobile dans un environnement au moyen de mesures radiofréquences effectuées sur des signaux échangés entre ce nœud mobile et plusieurs nœuds de références. Les mesures portent sur des temps de vol des signaux échangés ou des distances, calculées à partir des temps de vol. Les nœuds de référence peuvent être des stations de communication terrestre, dans ce cas le domaine d'application est celui de la localisation radio. Les nœuds de référence peuvent aussi être des satellites, dans ce cas le domaine d'application est celui de la radionavigation par satellite.

L'invention a plus précisément pour objet une méthode et un système de localisation (radio ou par satellite) assisté par un modèle d'intelligence artificielle et une carte de visibilité de l'environnement du nœud mobile et des nœuds de référence.

Dans le domaine de la localisation par satellite, les mesures de pseudo-distance ou de phase peuvent être utilisées pour déterminer la position ainsi que le décalage d'horloge du récepteur, tandis que la mesure de décalage Doppler est utilisée pour la détermination de la vitesse et de la dérive d'horloge du récepteur.

Par exemple, si l'on considère une mesure de pseudo-distance $\rho_i$ entre un récepteur de coordonnées *x, y, z* et un satellite SVi de coordonnées $x_i, y_i, z_i$ , cette mesure respecte la relation suivante :

$$\rho_i = d_i(x, y, z) + \delta + \varepsilon_i \qquad (1)$$

Où $d_i$ est la distance géométrique entre le récepteur et le satellite SVi,

$$d_i(x, y, z) = \sqrt{(x - x_i)^2 + (y - y_i)^2 + (z - z_i)^2} \qquad (2)$$

$\delta$ est un décalage de distance résultant d'un décalage d'horloge $\Delta t$ entre le récepteur et la constellation (tous les satellites appartenant à une même constellation GNSS étant parfaitement synchronisés, le décalage est le même pour tous les satellites de la constellation) converti en mètres en le multipliant avec la vitesse de la lumière *c*

$$\delta = \Delta t \cdot c \qquad (3)$$

$\varepsilon_i$ est une erreur de mesure causée par de multiples phénomènes tels que :

- le bruit de mesure du récepteur, de l'ordre de quelques cm à quelques mètres,

- des retards de propagation dans l'ionosphère et la troposphère, de l'ordre de quelques cm à quelques mètres,

- des erreurs de position des satellites,

- des effets liés à la propagation du signal.

Le fonctionnement du système de radionavigation par satellite est tel que les observations en provenance de différents satellites sont collectées simultanément au cours d'une période de temps appelée « *époque* » (*epoch* = transmissions simultanées des signaux satellitaires) à l'issue de laquelle un ensemble de mesures {$\rho_i$} est collectée.

Le calcul de la solution de position (*x, y, z, $\delta$*) dépend du mode de fonctionnement du récepteur. On distingue en effet un mode de poursuite et un mode dit "single-epoch".

Le mode de poursuite est un mode de fonctionnement du récepteur pour lequel une solution a déjà été calculée lors d'une époque précédente *k*-1. Dans ce cas, la solution à l'instant *k* est obtenue par la mise à jour de la solution *k*-1 en utilisant les mesures collectées lors de l'époque *k.* Ce calcul est généralement effectué par un filtre de Kalman ou l'un de ses nombreux dérivés (EKF, UKF, etc.).

Le mode dit « single-epoch » est un mode de fonctionnement du récepteur pour lequel aucune solution précédente n'est disponible. Ce mode, *a priori* moins performant que le mode de poursuite, trouve néanmoins un intérêt pour certaines applications telles que :

- l'initialisation de l'algorithme de poursuite,

l'utilisation dans un contexte de fusion avec d'autres modalités de mesures telles que les centrales inertielles, où les solutions calculées sont filtrées à nouveau par un autre algorithme,

dans certaines applications (ex : IoT pour Internet of Things) où le calcul est effectué à distance (dans un serveur distant) et pour lesquelles différentes contraintes (consommation, débit) ne permettent qu'un transfert ponctuel des mesures depuis les nœuds/tags capteurs à localiser.

L'invention concerne plus particulièrement, mais pas uniquement, le mode dit « single-epoch » en ce qu'il vise le calcul d'une solution de positionnement pour une époque donnée à l'instant k sans bénéfice d'une solution antérieure.

En mode dit *single epoch,* le calcul d'une solution de position ( $X = [x, y, z, \delta]$ ) comprenant quatre inconnues peut donc être déterminé à partir de l'ensemble des mesures $\{\rho_i\}$ collectées à l'époque *k* en utilisant l'équation (1). Puisque le nombre de mesures *N* (typiquement, de 4 à 50) est généralement supérieur au nombre d'inconnues qui est au moins égal à 4, la solution doit être donc calculée au sens d'un critère de minimisation des erreurs affectant les mesures - encore appelés résidus - tel que les moindres carrés. Plus précisément, le nombre d'inconnues est égal à 4 lorsque tous les signaux reçus sont émis par des satellites de la même constellation (par exemple la constellation GPS). Si les signaux sont émis par des satellites d'au moins deux constellations (par exemple GPS et GALILEO) alors le nombre d'inconnues est égal à 5. De façon générale, le nombre d'inconnues est égal à 3+m, où m est le nombre de constellations de satellites envisagé.

La relation (4) donne l'équation des moindres carrés permettant de déterminer la solution de position X en recherchant la solution qui minimise une somme pondérée des résidus élevés au carré.

$$(x, y, z, \delta) = \arg \min_{x, y, z, \delta} \sum_{i=1}^{N} \omega_i \Delta_i(X)^2 \tag{4}$$

Les résidus $\Delta_i(X)$ correspondent à la différence entre la prédiction de la mesure selon le modèle de l'équation (1) pour la solution *X* d'une part, et la mesure $\rho_i$ réalisée d'autre part, où x,y,z et $\delta$ sont les solutions de l'équation (4).

$$\Delta_i(X) = \rho_i - (d_i(x, y, z) + \delta) \tag{5}$$

Et $\omega_i$ définit le coefficient de pondération associé à la mesure #i, c'est-à-dire « l'importance » que celle-ci aura dans le calcul de la solution.

Le terme $\omega_i$ définit le coefficient de pondération ou poids associé à chaque mesure $\omega_i$. Plus celui-ci est élevé, plus la mesure associée aura une contribution élevée sur la solution calculée. Un poids nul $\omega_i = 0$ signifie qu'une mesure n'a aucune influence sur la solution calculée et est donc équivalent à l'absence de cette mesure. Dans le cas où le poids est non nul, son importance est évaluée relativement aux poids des autres mesures, sa valeur seule ne permet donc pas de définir son importance.

Il existe plusieurs stratégies de pondérations pour la résolution des moindres carrés donnée par l'équation (4). Une solution possible consiste à calculer le poids $\omega_i$ en fonction de l'erreur probable associée à chaque mesure en utilisant le modèle de l'équation (6), c'est-à-dire l'inverse de la variance $\sigma_i^2$ de l'erreur probable sur la mesure d'indice i.

$$\omega_i = \frac{1}{\sigma_i^2} \tag{6}$$

Cette stratégie de pondération trouve en effet des fondements théoriques (estimation Bayésienne), qui permettent de la justifier sous certaines hypothèses. Dans ce cas, l'erreur probable $\sigma_i$ est l'écart type associé à la distribution de l'erreur de la mesure $\rho_i$, c'est-à-dire la distribution du terme aléatoire $\varepsilon_i$ de l'équation (1). Outre sa justification théorique, cette approche permet de relier la valeur $\sigma_i$ exprimée en mètres, à des phénomènes physiques mesurables. Ainsi, la distribution des erreurs de mesure peut être établie empiriquement par des campagnes de test, ou à partir d'autres éléments connus (précision de positionnement des satellites, propagation dans l'ionosphère, bruit du récepteur etc.). Typiquement, les valeurs $\sigma_i$ sont comprises entre 0.1m et 20m, mais peuvent varier en fonction de l'intensité du signal reçu ou de l'élévation du satellite par exemple.

Les techniques reliant différentes métriques annexes (rapport signal à bruit C/N0, élévation du satellite etc.) à la précision supposée de la mesure sont appelées pondération stochastique.

Par exemple, la variance de l'erreur peut être obtenue au moyen d'un modèle empirique donné par l'équation (7).

$$\sigma_i^2 = \frac{1}{\sin^2 \theta_i} \left( \sigma_1^2 + \frac{\sigma_2^2}{\gamma_i} \right) \tag{7}$$

Dans laquelle $\theta_i$ et $\gamma_i$ représentent respectivement l'angle d'élévation ainsi que l'intensité du signal reçu du satellite SVi, et $\sigma_1^2$ et $\sigma_2^2$ sont deux termes empiriques.

D'autres modèles empiriques peuvent être utilisés en remplacement de celui donné ci-dessus.

Si ces formules empiriques sont largement utilisées, elles n'en demeurent pas moins difficiles à régler, et une modélisation plus fine de la distribution de chacune des mesures reçues permettrait une amélioration des performances. Cependant, cette modélisation plus fine peut s'avérer extrêmement complexe en pratique, tant le nombre de phénomènes en jeu sont nombreux (état des couches atmosphériques, type de récepteur, précision de positionnement du satellite, présence d'obstacles dans l'environnement du récepteur etc.) et difficiles à prédire.

Par ailleurs, afin de garantir l'optimalité, et donc une bonne précision, des solutions calculées, il est important que l'ensemble des mesures prises en compte pour établir cette solution soient conformes au modèle utilisé a priori, c'est-à-dire dans une plage d'erreur attendue.

Dans le domaine des systèmes de navigation par satellite, il existe donc un besoin pour une méthode de localisation qui permette de mieux prendre en compte les incertitudes liées aux modèles théoriques de calculs des coefficients de pondération lors de la résolution de la solution par les moindres carrés.

Les mêmes problématiques existent dans le domaine de la localisation radio.

En particulier les équations (1) à (5) s'appliquent également à des signaux échangés entre un nœud mobile et des stations terrestres. Dans ce cas, les coordonnées $x_i$, $y_i$, $z_i$ sont celles des stations terrestres et non pas des satellites. Les mêmes problèmes de différences d'horloges et d'aléa de synchronisation temporelle existent. Les résidus peuvent être calculés comme des différences de mesures de temps de vol ou de distance.

Par ailleurs, dans les deux domaines d'application, les solutions existantes de localisation ne prennent pas toujours en compte l'impact des obstacles, notamment en environnement urbain, et en particulier l'influence des réflexions ou des diffractions des signaux sur ces obstacles.

Selon l'environnement dans lequel l'onde se propage, celle-ci peut être réfléchie (on parle de multi-trajet ou multipath) et/ou obstruée. On parle de Line Of Sight (LOS) en cas de propagation de l'onde sur un trajet direct, sans réflexion, entre l'émetteur et le récepteur, et de Non-Line Of Sight (NLOS) dans le cas contraire.

Ceci se produit par exemple en environnement urbain où les bâtiments peuvent jouer à la fois le rôle d'obstacles et/ou de réflecteurs pour l'onde électromagnétique.

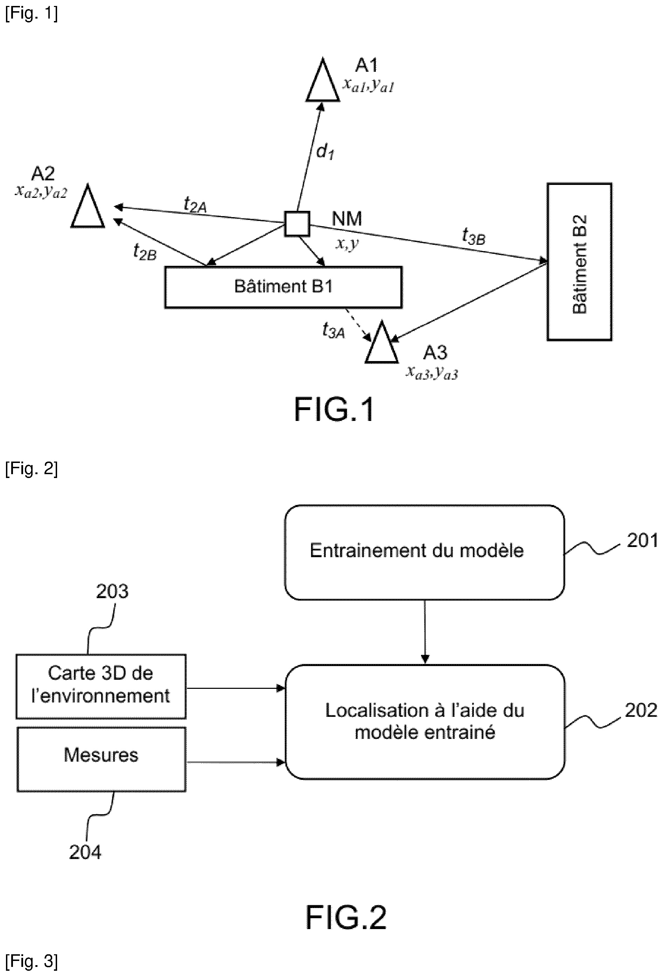

La figure 1 illustre ces différentes situations.

Le nœud de référence A1 est en situation de LOS sans multi-trajet par rapport au nœud mobile TM car il ne reçoit que le trajet direct, sans trajet réfléchi. Le nœud de référence A2 est en situation de LOS avec multi-trajet par rapport au nœud mobile TM car il reçoit le trajet direct $t_{2A}$ ainsi qu'un trajet réfléchi $t_{2B}$. Le nœud de référence A3 est en situation de NLOS avec multi-trajet par rapport au nœud mobile TM car il ne reçoit pas le trajet direct $t_{3A}$ qui est obstrué par le bâtiment B1 mais il reçoit un trajet réfléchi $t_{3B}$ par le bâtiment B2 ainsi qu'un trajet diffracté par le bâtiment B1.

Une situation NLOS sans multi-trajet conduit à la non réception du signal puisque celui-ci ne dispose d'aucun chemin pour parvenir à sa destination.

Dans la représentation de la figure 1, la mesure effectuée par le nœud de référence A1 peut être considérée comme la plus fiable car elle ne subit aucune perturbation dans sa propagation. L'erreur associée ($\varepsilon_1$) est dans ce cas principalement déterminée par le bruit de la mesure, ce qui constitue une erreur minimale.

Par exemple, pour une forme d'onde de type LoRa, l'erreur causée par le bruit seul est typiquement de l'ordre de la centaine de mètres (entre 10 m et 300 m).

La mesure effectuée par le terminal fixe A2 peut être perturbée par la présence du multi-trajet. L'erreur engendrée dépend de la capacité du nœud de référence A2 à distinguer le trajet direct du trajet réfléchi (qui arrivera en retard par rapport au trajet direct), ainsi que par la puissance relative de celui-ci par rapport au trajet direct. Il s'agit donc d'une situation intermédiaire.

Par exemple, pour une forme d'onde de type LoRa, l'erreur causée par le bruit et le multi-trajet est très variable selon les caractéristiques des trajets réfléchis. Les erreurs peuvent varier entre quelques dizaines de mètres (identique au bruit seul) et plusieurs kilomètres.

La mesure effectuée par le nœud de référence A3 est quant à elle fortement biaisée. En effet, le seul signal parvenant jusqu'à ce nœud de référence a parcouru une distance correspondant au trajet $t_{3B}$, significativement plus grande que le trajet direct $t_{3A}$ ; le temps de vol est donc le reflet de cette distance et non pas de celle du trajet direct. Cette mesure est généralement qualifiée d'artefact (ou d'outlier) car elle présente une erreur qui peut être supérieure de plusieurs ordres de grandeur à la seule erreur due au bruit.

Par exemple, pour une radio de type LoRa, l'erreur dans une situation NLOS est typiquement de plusieurs centaines de mètres à plusieurs kilomètres.

La difficulté d'une telle situation est qu'il très difficile, voire impossible, de déterminer quelle est la fiabilité de chacune des mesures.

Un autre problème technique à résoudre dans le domaine de la localisation dans des environnements comprenant des obstacles est de prendre en compte l'impact de ces obstacles sur la qualité des signaux et donc des mesures effectuées pour améliorer la précision de la localisation finale.

La demande de brevet français du Demandeur publiée sous le numéro FR3136065 décrit un procédé de localisation d'un nœud mobile par mesures radio utilisant une carte de visibilité.

La méthode proposée dans cette demande exploite des informations sur l'environnement du nœud mobile et des nœuds de référence sous la forme d'une carte de l'environnement qui permet d'établir une carte de visibilité pour différentes hypothèses de position du nœud mobile dans la carte. La localisation du nœud est effectuée au moyen d'un calcul de score de cohérence pour chaque hypothèse de position, le score de cohérence étant déterminé en fonction d'un indicateur de visibilité entre la position supposée du nœud mobile et le nœud de référence.

La demande de brevet français du Demandeur déposée sous le numéro FR2304055 porte sur une méthode de localisation au moyen de signaux de radionavigation par satellite qui utilise un modèle d'intelligence artificielle pour déterminer un ensemble de coefficients de pondération optimaux utilisés pour déterminer la position du nœud mobile au moyen d'une résolution des moindres carrés appliquée à un ensemble de résidus pondérés par ces coefficients.

Les deux solutions précitées ne prennent pas pleinement en compte les informations de cartographie pour estimer finement l'impact des trajets réfléchis et des trajets diffractés sur les obstacles dans le calcul de la position du nœud mobile.

L'invention porte sur une nouvelle méthode de localisation radio ou par satellite qui exploite des informations supplémentaires concernant les trajets du signal entre le nœud mobile et les nœuds de référence à partir d'une carte 3D de l'environnement. Les informations concernent des caractéristiques des trajets directs, diffractés et réfléchis du signal. Ces informations supplémentaires permettent d'enrichir l'apprentissage d'un modèle d'intelligence artificielle entrainé pour déterminer une position par résolution des moindres carrés et sont combinées avec le calcul d'un score de cohérence déterminé pour une pluralité de positions de la carte.

Un objet de l'invention est une méthode, mise en œuvre par ordinateur, d'apprentissage d'un modèle d'intelligence artificielle destiné à être utilisé pour déterminer une position d'un nœud mobile dans une zone donnée, la méthode comprenant les étapes de :

- Recevoir un ensemble de données d'apprentissage comprenant plusieurs ensembles de mesures radiofréquence correspondant à des signaux échangés respectivement entre un nœud mobile de position connue et plusieurs nœuds de référence de positions connues et une carte 3D représentative de l'environnement du nœud mobile et des nœuds de référence,

- Déterminer, pour chaque ensemble de mesures, un ensemble de métriques comprenant au moins un premier ensemble de résidus calculés pour plusieurs sous-ensembles de mesures excluant chacun au moins une mesure de l'ensemble et un second ensemble d'indicateurs des trajets de propagation radio entre le nœud mobile et chaque nœud de référence tenant compte des obstacles de l'environnement représentés dans la carte 3D,

- Pour chaque ensemble de mesures,

    i. Déterminer un ensemble de coefficients de pondération de référence,

    ii. Entrainer le modèle d'intelligence artificielle à produire un ensemble de coefficients de pondération à partir des ensembles de métriques des données d'apprentissage, de manière à minimiser une distance entre lesdits coefficients de pondération et les coefficients de pondération de référence,

- les coefficients de pondération étant destinés à pondérer un ensemble de résidus, égaux à une différence entre une mesure et une information de positionnement prédite, lors d'un calcul de prédiction d'une information de positionnement par minimisation de la somme des résidus élevés au carré et pondérés par les coefficients de pondération.

Selon des modes de réalisation particulier d'une telle méthode :

- chaque coefficient de pondération de référence peut être fonction d'un résidu calculé à partir de chaque mesure radiofréquence et des distances ou temps de vol entre le nœud mobile et chaque nœud de référence.

- Le modèle d'intelligence artificielle peut être un réseau de neurones artificiels, par exemple un réseau de neurones récurrents.

Un autre objet de l'invention est une méthode de localisation d'un nœud mobile dans une zone donnée comprenant les étapes de :

- Recevoir un ensemble de N mesures radiofréquence correspondant à des signaux échangés respectivement entre un nœud mobile à localiser et N nœuds de références de positions connues dans la zone, N étant un entier au moins égal à 4,

- Recevoir une carte 3D représentative de ladite zone,

- Déterminer, à partir des mesures reçues, un premier ensemble de résidus calculés pour plusieurs sous-ensembles de mesures comprenant chacun au plus N-1 mesures,

- Pour une pluralité de positions données de la carte,

  i. Déterminer, à partir de la carte 3D, un second ensemble d'indicateurs des trajets de propagation radio entre ladite position de la carte et la position de chaque nœud de référence, tenant compte des obstacles de l'environnement représentés dans la carte 3D,

  ii. Exécuter une phase d'inférence du modèle d'intelligence artificielle entrainé au moyen de la méthode d'apprentissage ci-dessus, à partir du premier et second ensemble pour déterminer un ensemble de coefficients de pondération,

  iii. Déterminer une position provisoire du nœud mobile à partir desdites mesures et des coefficients de pondération en recherchant la valeur de la position qui minimise la somme des résidus élevés au carré, associés aux N mesures, et pondérés par les coefficients de pondération.

  iv. calculer un score de cohérence entre la position provisoire et la position donnée de la carte

- déterminer la position finale du nœud mobile en fonction du score de cohérence

Selon des modes de réalisation particuliers d'une telle méthode de localisation d'un nœud mobile :

- Le score de cohérence peut être calculé à partir de la somme des résidus élevés au carré, associés aux N mesures, et pondérés par les coefficients de pondération, les résidus étant calculés pour la position provisoire.

- La position finale du nœud mobile peutla position de la carte qui donne le score de cohérence le plus élevé ou qui est égale à une moyenne des positions de la carte pondérées par leurs scores de cohérence respectifs.

Selon divers modes de réalisation de l'invention :
Le second ensemble d'indicateurs des trajets de propagation radio peut comprendre au moins un indicateur parmi un indicateur de trajet direct, un indicateur de trajet diffracté et un indicateur de trajet réfléchi.

- L'au moins un indicateur de trajet direct peut être pris parmi un indicateur du nombre de bâtiments interceptés par le trajet ou un indicateur de la distance totale parcourue par le signal à l'intérieur des bâtiments traversés.

- En variante, l'au moins un indicateur de trajet diffracté peut être pris parmi un indicateur de la distance supplémentaire parcourue pour le trajet diffracté par rapport au trajet direct ou un indicateur de l'angle de diffraction. Dans ce cas la méthode peut comprendre la détermination du trajet diffracté comme étant le trajet de distance minimum interceptant une arête d'un obstacle parmi l'ensemble des obstacles présents sur la carte 3D.

- En variante, l'au moins un indicateur de trajet réfléchi est pris parmi un indicateur de la distance supplémentaire parcourue pour le trajet réfléchi par rapport au trajet direct ou un indicateur de l'angle de réflexion. Dans ce cas, la méthode peut comprendre la détermination du trajet réfléchi comme étant le trajet de distance minimum réfléchi sur une face d'un obstacle parmi l'ensemble des obstacles présents sur la carte 3D.

- La mesure radiofréquence peut être une mesure de temps de vol et un résidu est calculé comme la différence entre la mesure et le temps de vol théorique entre la position du nœud mobile et la position d'un nœud de référence ou la mesure radiofréquence peut être une mesure de distance et un résidu être calculé comme la différence entre la mesure et la distance entre le nœud mobile et le nœud de référence.

- Les mesures radiofréquence sont des mesures de radionavigation par satellite et les nœuds de référence peuvent être des satellites ou les nœuds de référence sont des stations terrestres.

Encore un autre objet de l'invention est un système de localisation d'un nœud mobile comprenant une unité de traitement configurée pour exécuter les étapes de la méthode de localisation ci-dessus.

Encore un autre objet de l'invention est un programme d'ordinateur comportant des instructions pour l'exécution de la méthode ci-dessus, lorsque le programme est exécuté par un processeur.

Encore un autre objet de l'invention est un support d'enregistrement lisible par un processeur sur lequel est enregistré un programme comportant des instructions pour l'exécution de la méthode ci-dessu, lorsque le programme est exécuté par un processeur.

D'autres caractéristiques et avantages de la présente invention apparaîtront mieux à la lecture de la description qui suit en relation aux dessins annexés suivants.

[Fig. 1] représente un exemple illustrant des situations de multi-trajet et d'obstructions de signaux échangés entre un nœud mobile et plusieurs nœuds de référence,

[Fig. 2] représente un organigramme détaillant le fonctionnement général de l'invention,

[Fig. 3] représente un organigramme détaillant les étapes d'une méthode d'apprentissage d'un modèle d'intelligence artificielle destiné à être utilisé pour déterminer une information de localisation d'un nœud mobile, selon un mode de réalisation de l'invention,

[Fig. 4] représente un premier ensemble de résidus destiné à alimenter le moteur d'intelligence artificielle selon un premier exemple de réalisation,

[Fig. 5] représente un second ensemble de caractéristiques de liens destiné à alimenter un moteur d'intelligence artificielle selon un second exemple de réalisation.

[Fig. 6] représente un schéma illustrant différents trajets considérés pour déterminer le second ensemble de caractéristiques,

[Fig.7] représente un organigramme d'une méthode de détermination d'un trajet diffracté,

[Fig. 8] représente un organigramme d'une méthode de détermination d'un trajet réfléchi,

[Fig. 9] représente un organigramme détaillant les étapes d'une méthode de localisation d'un nœud mobile à partir du modèle d'intelligence artificielle entrainé par la méthode de la figure 3, selon un mode de réalisation de l'invention,

Dans la suite de la description, l'invention est décrite dans le contexte d'une méthode de localisation radio basée sur des mesures réalisées pour des signaux transmis selon une forme d'onde respectant un système de communications radio terrestre, par exemple une technologie de transmission 5G ou LoRA pour des réseaux de communications LPWAN (Low Power Wide Area Network ou réseau faible consommation longue portée) ou encore des réseaux de communications NB-IoT (Narrowband Internet of Things). Dans ce scénario, le nœud mobile à localiser embarque un dispositif de communication radio respectant l'un de ces standards de communication et les nœuds de références sont des stations de base terrestre de positions fixes connues qui font partie de l'infrastructure du réseau de communications (un exemple simple d'un tel réseau est représenté à la figure 1).

L'invention s'applique à l'identique pour des systèmes de radionavigation par satellites pour lesquels le nœud mobile embarque un dispositif de radionavigation par satellites et les nœuds de référence sont des satellites dont les positions sont connues au moyen d'éphémérides et d'informations transmises dans les messages de radionavigation.

La figure 2 schématise, sur un organigramme, le fonctionnement général de l'invention.

L'invention est décomposée en deux phases. Une première phase 201 au cours de laquelle un modèle d'intelligence artificielle, par exemple un réseau de neurones artificiel, est entraîné à partir d'une base d'apprentissage pour apprendre une fonction f qui permet de calculer automatiquement les coefficients de pondération $\omega_i$ qui sont utilisés pour pondérer les résidus calculés à partir des mesures (équation 4). L'apprentissage est réalisé à partir d'un ensemble de caractéristiques conjointes et propres à chaque lien de communication.

Dans le cas où les mesures sont des mesures de temps de vol, l'équation 5 de calcul d'un résidu devient :

7

$$\Delta_i(X) = T_i - (h_i(x,y,z)) \qquad (8)$$

Avec

$$h_i(x,y,z) = \frac{1}{c}\sqrt{(x-x_i)^2 + (y-y_i)^2 + (z-z_i)^2} + t_0$$

(x,y,z) sont les coordonnées du nœud mobile, $(x_i, y_i, z_i)$ sont les coordonnées de la station de base (nœud de référence) et $t_0$ est l'erreur de synchronisation.

L'entrainement est réalisé sur un nombre K de jeux de mesures $\{\{T_i\}^k\}_{k=1..K}$ par exemple associés à k positions connues du nœud mobile. L'entrainement est réalisé de manière que les coefficients de pondération obtenus soient le plus proche possible de coefficients de référence $\left\{\omega_i^{ref}\right\}^k$. Le nombre $K$ de jeux de mesures utilisés est tel que $K.N$ soit supérieur au nombre de paramètres $P$ ($K.N > P$) et est par exemple compris entre 10000 et 10000000. N est le nombre de mesures réalisées à partir de signaux émis par des satellites différents.

Par exemple, les coefficients de pondération de référence sont calculés en utilisant l'équation (6) à partir d'une solution de position de référence connue $X^{ref}$ qui est par exemple fournie par un récepteur à haute précision qui peut être muni d'une centrale inertielle ou tout autre moyen indépendant du réseau de communications visé.

Les paramètres du modèle d'intelligence artificielle $\{v_u^0\}_{u=1:P}$ sont ajustés par exemple de manière à minimiser une fonction de cout C qui est fonction d'une distance entre les coefficients de pondération obtenus et les coefficients de pondération de référence.

La fonction de cout C est par exemple donnée par la relation (9):

$$C(\{v_u\}) = \sum_{k=1}^{K} \sum_{i=1}^{N} \left\| \left\{\omega_i^{ref}\right\}^k - \{\omega_i\}^k \right\| \qquad (9)$$

Dans une deuxième phase 202 de l'invention, le modèle d'intelligence artificielle entrainé lors de la première phase 201 est ensuite utilisé pour prédire, à partir de nouvelles mesures, un ensemble de coefficients de pondération qui sont utilisés pour calculer une solution de positionnement d'un nœud mobile.

La localisation du nœud mobile est réalisée à partir de mesures 204 (similaires à celles réalisées pour générer la base d'entrainement du modèle) et d'une carte 3D de l'environnement 203 du nœud mobile.

Le modèle d'intelligence artificielle utilisé peut être un réseau de neurones artificiel, par exemple un réseau de neurones récurrents ou tout autre modèle qui peut être entrainé pour apprendre à exécuter une fonction particulière.

Selon un mode de réalisation particulier de l'invention, le modèle d'intelligence artificielle est un réseau de neurones récurrents ou LSTM-NN pour « Long Short Term Memory Neural Network ». Le réseau comporte, par exemple deux couches cachées de respectivement 893 et 517 neurones. La couche d'entrée comporte autant de neurones que de métriques calculées à partir des mesures et de la carte 3D de l'environnement et la couche de sortie comporte un nombre $N_{neur}$ de neurones égal au nombre de coefficients de pondération à générer qui est lui-même égal au nombre maximum de mesures associées à des nœuds de référence différents qu'un récepteur peut recevoir. Ce paramètre peut être défini a priori.

Les fonctions d'activation des couches du réseau de neurones sont par exemple, une fonction tangente hyperbolique (tanh) ou une fonction d'activation ReLU. Les paramètres du réseau de neurones, en particulier les coefficients synaptiques sont initialisés à une valeur prédéterminée, par exemple 0 ou 1 ou une valeur aléatoire entre 0 et 1.

Le nombre de couches (1 à 100), le nombre de neurones (5 à 1000 par couche) de même que le nombre de paramètres P = 1000 à 100 000 000 peut varier. La « fonction d'activation » de chaque couche peut être choisie parmi des exemples tels que ReLU, tanh, ou sigmoid par exemple, ou encore softmax pour la couche de sortie. Le nombre de couches, de même que le nombre de neurones et le choix de la fonction d'activation peuvent eux même faire partie des paramètres pouvant être optimisés lors de l'étape d'apprentissage 302. D'autres types de réseaux peuvent également être utilisés tels que des réseaux de type totalement connectés « fully connected » ou convolutionnels « CNN » (convolutionnal-NN) ou encore des réseaux GRU (« Gate Recurrent Unit ») par exemple.

Les données d'entrée du réseau de neurones sont normalisées entre 0 et 1 en divisant chacune des valeurs par une valeur prédéterminée (exemple 10, 100 ou 1000) ou par la valeur maximale des valeurs calculées sur toutes les données d'entrée.

On décrit à présent plus en détail chaque phase de l'invention.

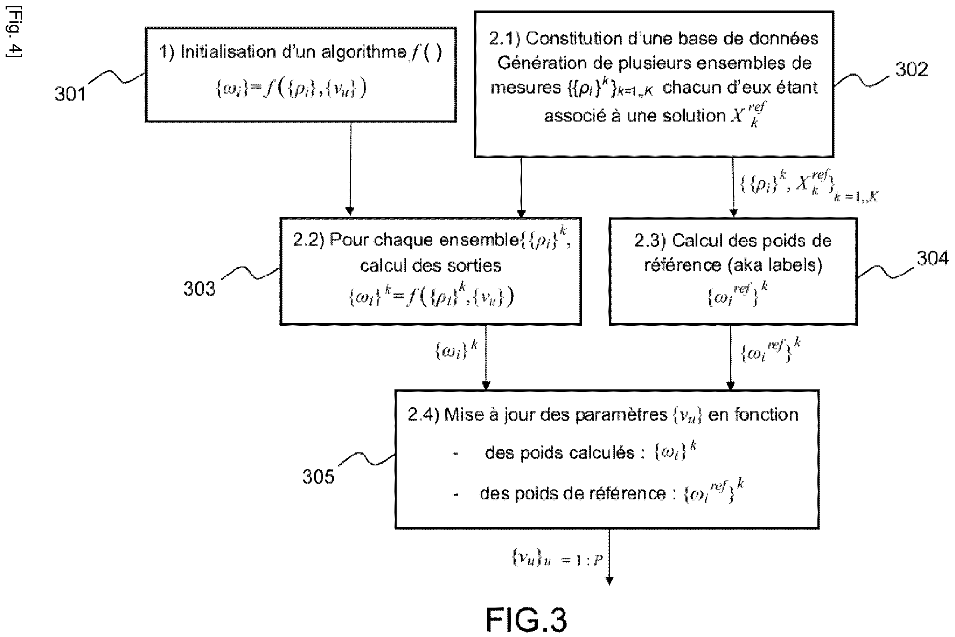

La figure 3 représente, sur un organigramme, les étapes de mise en œuvre d'une méthode d'apprentissage d'un modèle d'intelligence artificielle selon un mode de réalisation de l'invention.

La méthode débute par une étape 301 d'initialisation des paramètres du modèle à entrainer. Plus précisément, les paramètres $\{v_u^0\}_{u=1:P}$ sont initialisés en vue d'apprendre une fonction f qui permet de calculer les coefficients de pondération $\{\omega_i\}_{i=1:N}$ associés à des mesures $\{\rho_i\}_{i=1..N}$ à partir d'un ensemble de métriques qui seront explicitées par la suite.

L'étape 302 consiste à générer une base de données d'apprentissage pour réaliser l'apprentissage du modèle. Les données d'apprentissage sont constituées de plusieurs ensembles, chaque ensemble étant constitué de plusieurs mesures radio, d'une solution de positionnement de référence associée $\{\{\rho_i\}^k, X_k^{ref}\}_{k=1..K}$ ainsi qu'une carte 3D de l'environnement comprenant la position de référence du nœud à localiser, les positions des stations de base terrestres (nœuds de références) ainsi que l'ensemble des obstacles de l'environnement.

La base de données peut être construite en collectant des mesures $\{\rho_i\}^k$ réelles au moyen d'un récepteur et en mesurant la position de référence à partir d'un système très performant ( $x_k^{ref}, y_k^{ref}, z_k^{ref}$ ), par exemple un système inertiel ou un système GNSS à haute précision ou une combinaison des deux systèmes.

Les mesures $\{\rho_i\}^k$ sont soit des mesures de temps de vol du signal transmis entre le nœud mobile à localiser et un nœud de référence (une station de base), soit des mesures de distances obtenues en multipliant les mesures de temps de vol par la vitesse de l'onde..

Les mesures peuvent également comprendre des indicateurs de rapport signal à bruit C/N0.

Selon une autre variante de réalisation, la base de données d'apprentissage est générée par simulation.

Deux ensembles de métriques sont calculés à partir de la base de données d'apprentissage.

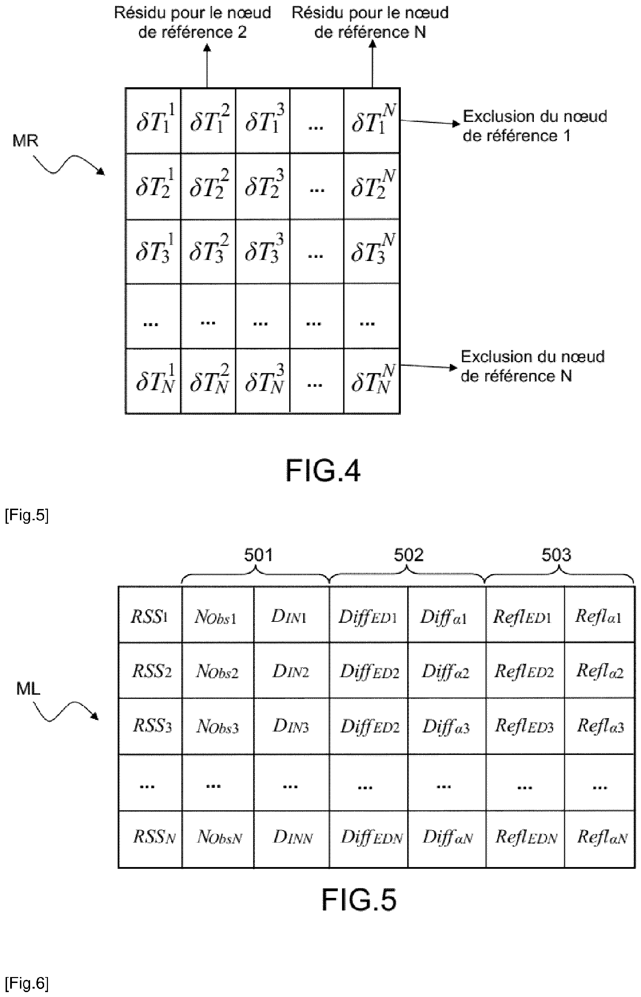

Un premier ensemble de métriques conjointes est calculé sous la forme d'un ensemble de résidus organisés dans une matrice MR comme représentée à la figure 4.

Les résidus sont des métriques conjointes qui prennent en compte l'impact simultané de mesures multiples sur plusieurs liens de communication entre le nœud mobile à localiser d'une part et plusieurs nœuds de référence.

La matrice MR de résidus est construite à partir de N mesures effectuées pour N nœuds de référence distincts. Les mesures sont par exemple des mesures de temps de vol $T_i$. Pour chaque ligne de la matrice, on sélectionne un sous ensemble $S_n$ de ces mesures comprenant N - 1 mesures (toutes sauf une) : $S_n = \{T_i\}_{i=1..N}$, $i \neq n$. Pour chacun des sous-ensembles $S_n$, on calcule un résidu $\delta T_i^n$ pour chaque mesure, avec i variant de 1 à N, i≠n et n variant de 1 à N.

Le résidu est égal à $T_i^n = T_i - T'_i$, avec $T_i$ la mesure et $T'_i$ le temps de vol théorique calculé à partir de la distance entre le nœud mobile et le nœud de référence d'indice i.

La matrice MR de résidus est donc une matrice carrée à N lignes et N colonnes.

Dans le détail, chaque résidu est calculé de la façon suivante.

A partir des N mesures de temps de vol, on définit N ensembles de mesures comprenant chacun N-1 mesures $S_n = \{T_i\}_{i=1..N}$, $i \neq n$.

Pour chaque ensemble $S_n$ on calcule une solution de positionnement $\hat{r}_n$ au moyen d'une résolution des moindres carrés des équations suivantes.

En considérant un nœud mobile de position r = [x y z]$^T$ et une station de base (nœud de référence) de position $r_i$ = [$x_i$ $y_i$ $z_i$]$^T$ la mesure de temps de vol $T_i$ entre les deux nœuds peut être modélisée au moyen des relations suivantes :

$$T_i = h(\mathrm{r}, t_0, \mathrm{r}_i) + v \qquad (10)$$

Avec

$$h(\mathrm{r}, t_0, \mathrm{r}_i) = \frac{1}{c}\sqrt{(x - x_i)^2 + (y - y_i)^2 + (z - z_i)^2} + t_0 \qquad (11)$$

$t_0$ est une erreur de synchronisation temporelle et v est une variable aléatoire, suivant une distribution Gaussienne, qui représente les erreurs de mesure et les erreurs du canal de transmission, en particulier liées aux multi-trajets et aux propagations NLOS.

Une solution de positionnement $\hat{r}_n$ est calculée en recherchant le minimum de la fonction donnée à l'équation (12)

$$\hat{r}_n = \arg\min p_{\bar{r}_n} \tag{12}$$

Avec

$$p_{\bar{r}_n}(\hat{r}_n, T_1, \dots, T_N) = \sum_{i=1, i\neq n}^{N} \left( \frac{T_i - h(\hat{r}_n, \hat{t}_0, r_i)}{\sigma_i} \right)^2 \tag{13}$$

Le terme $T_i - h(\hat{r}_n, \hat{t}_0, r_i)$ correspond à un résidu calculé entre la mesure $T_i$ et le temps de vol théorique $h(\hat{r}_n, \hat{t}_0, r_i)$

Les coefficients de pondération $\sigma_i$ sont pris égaux à une valeur prédéfinie, par exemple ils sont pris tous égaux à 1.

Ensuite, chaque résidu de la matrice de résidus MR est calculé au moyen de la relation suivante :

$$\delta T_i^n = T_i - h(\hat{r}_n, r_i), i = 1..N \tag{14}$$

Le second ensemble de métriques de lien ML est représenté à la figure 5, il comporte autant de lignes que de nœuds de référence.

Chaque ligne comporte plusieurs indicateurs relatifs à la qualité du lien.

Par exemple, un premier indicateur possible est une mesure du rapport signal à bruit sur le lien $RSS_i$.

Pour compléter ces indicateurs, il est proposé de s'appuyer sur une carte 3D de l'environnement dans laquelle sont positionnés chaque nœud associé aux différentes mesures fournies mais aussi les obstacles, notamment urbains présents dans la zone.

On détermine ensuite trois types d'indicateurs possibles qui influencent la propagation du signal : un premier ensemble 501 d'indicateurs caractérisant les trajets directs entre le nœud mobile à localiser et un nœud de référence, un deuxième ensemble 502 d'indicateurs caractérisant les trajets diffractés via des angles d'obstacles entre le nœud mobile à localiser et un nœud de référence et un troisième ensemble 503 d'indicateurs caractérisant les trajets réfléchis via des obstacles, entre le nœud mobile à localiser et un nœud de référence.

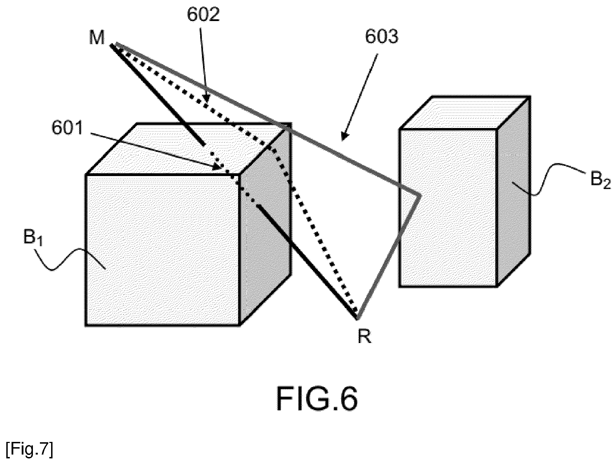

La figure 6 illustre, sur un schéma simplifié les différents trajets possibles d'un signal transmis entre un nœud mobile M et un nœud de référence R dans un environnement comprenant deux obstacles $B_1, B_2$ qui sont par exemple des bâtiments.

Le trajet direct 601 entre les deux nœuds $N_m$, $N_{ref}$ traverse le bâtiment $B_1$. Il est en conséquence atténué par la traversée de ce bâtiment.

Le premier ensemble d'indicateurs 501 caractérisant les trajets directs comprend au moins un indicateur parmi : le nombre d'obstacles $N_{obs}$ traversés par le signal et la distance $D_{IN}$ totale parcourue par le signal à travers les obstacles (par exemple les bâtiments) traversés.

Le nombre d'obstacles traversés par le signal est un indicateur du caractère NLOS du trajet. Un nombre d'obstacles égal à 0 indique une propagation LOS.

La distance totale que le signal parcourt à travers des bâtiments donne également une information sur la puissance du signal reçu et notamment son atténuation.

Le trajet 602 est un trajet diffracté sur un angle du bâtiment $B_1$.

Le deuxième ensemble 502 d'indicateurs caractérisant les trajets diffractés comprend au moins un indicateur parmi : la distance $Diff_{EDi}$ supplémentaire parcourue par le trajet diffracté par rapport au trajet direct 601, l'angle de diffraction $Diff_{\alpha i}$ entre les deux rayons du trajet diffracté.

La distance $Diff_{EDi}$ donne une indication sur l'erreur de positionnement commise si le trajet diffracté est détecté comme un trajet direct.

L'angle de diffraction donne une indication sur la probabilité que le trajet diffracté soit reçu. Par exemple, si cet angle est proche de 180°, cela indique une faible diffraction et donc une forte probabilité de recevoir le signal. Si l'angle de diffraction est plus faible, par exemple de l'ordre de 100°, cela indique une forte diffraction associée à une atténuation importante du signal et une faible probabilité de réception.

Enfin, le trajet 603 est un trajet réfléchi sur une face du bâtiment $B_2$.

Le deuxième ensemble 503 d'indicateurs caractérisant les trajets réfléchis comprend au moins un indicateur parmi : la distance $Refl_{EDi}$ supplémentaire parcourue par le trajet réfléchi par rapport au trajet direct 601, l'angle de réflexion $Refl_{\alpha i}$ entre les deux rayons du trajet réfléchi

La distance $Refl_{EDi}$ donne une indication sur l'erreur de positionnement commise si le trajet réfléchi est détecté comme un trajet direct.

L'angle de réflexion donne une indication sur la probabilité que le trajet réfléchi soit reçu.

Le deuxième ensemble de métriques ML est déterminé à partir d'une carte 3D de l'environnement dans laquelle sont cartographiées toutes les données nécessaires aux calculs géométriques des métriques à savoir : la position du nœud mobile et des nœuds de référence ainsi que les coordonnées en 3D des différents obstacles. Les indicateurs 501,502,503 des différents trajets sont ainsi calculés à partir d'informations géométriques qui sont indépendantes des mesures fournies mais qui reproduisent les mêmes configurations géométriques que celles associées aux mesures.

Les deux ensembles de métriques MR, ML sont ensuite fournis en entrée du modèle et, à l'étape 303, pour chaque ensemble de mesures de la base de données d'apprentissage, une phase d'inférence du modèle est exécutée pour calculer les coefficients de pondération à partir des paramètres du réseau.

A l'étape 304, un ensemble de coefficients de pondération de référence sont déterminés. Avantageusement, ils sont calculés à partir de la position de référence et des mesures de références en utilisant, par exemple l'une des formules suivantes, où $\Delta_i^{ref}(X^{ref})$ est le résidu calculé pour la position de référence du nœud mobile $X^{ref}$

$$\omega_i^{ref} = \frac{1}{\left(\Delta_i^{ref}(X^{ref})\right)^2}$$

$$\omega_i^{ref} = \frac{1}{\left|\Delta_i^{ref}(X^{ref})\right|},$$

De façon générale, les coefficients de pondérations sont pris égaux à

$$\omega_i^{ref} = \frac{1}{\left|\Delta_i^{ref}(X^{ref})\right|^{\wedge k}} \quad \text{avec k un entier supérieur ou égal à 1}$$

A l'étape 305, le modèle est entrainé de sorte à ajuster ses paramètres $\{v_u\}$ en fonction :

- des coefficients de pondération calculés : $\{\omega_i\}^k$ ,

- des coefficients de pondération de référence : $\left\{\omega_i^{ref}\right\}^k$ .

Plus précisément si le modèle est un réseau de neurones, l'ajustement des paramètres est par exemple réalisé au moyen de :

- une phase de propagation des données d'apprentissage dans le réseau de neurones depuis les entrées du réseau vers ses sorties pour calculer des coefficients de pondération $\{\omega_i\}^k$ ,
- un calcul d'erreur entre la sortie calculée et le résultat à obtenir via une fonction de cout,
- une phase de rétropropagation de l'erreur qui vise à mettre à jour les paramètres ou coefficients synaptiques pour chaque connexion entre deux neurones à l'aide d'un algorithme de rétropropagation qui vise à minimiser la fonction de cout. L'algorithme de rétropropagation est par exemple basé sur une descente de gradient ou tout autre algorithme équivalent.

La fonction de cout est une fonction de distance entre les coefficients de pondération calculés et les coefficients de pondération de référence de sorte à faire converger les coefficients de pondération calculés vers les coefficients de référence.

Par exemple, la fonction de cout suivante peut être utilisée en remplacement de celle donnée à l'équation (9) :

$$C(\{v_u\}) = \sum_{k=1}^{K} \sum_{i=1}^{N} \left\| \left\{ \frac{1}{\omega_i^{ref}} \right\}^k - \left\{ \frac{1}{\omega_i} \right\}^k \right\| \qquad (15)$$

Toute autre fonction de cout traduisant un écart entre les coefficients calculés par l'algorithme et les coefficients de référence peut être utilisée.

Une fois le modèle entrainé, il peut être utilisé pour prédire une information de positionnement.

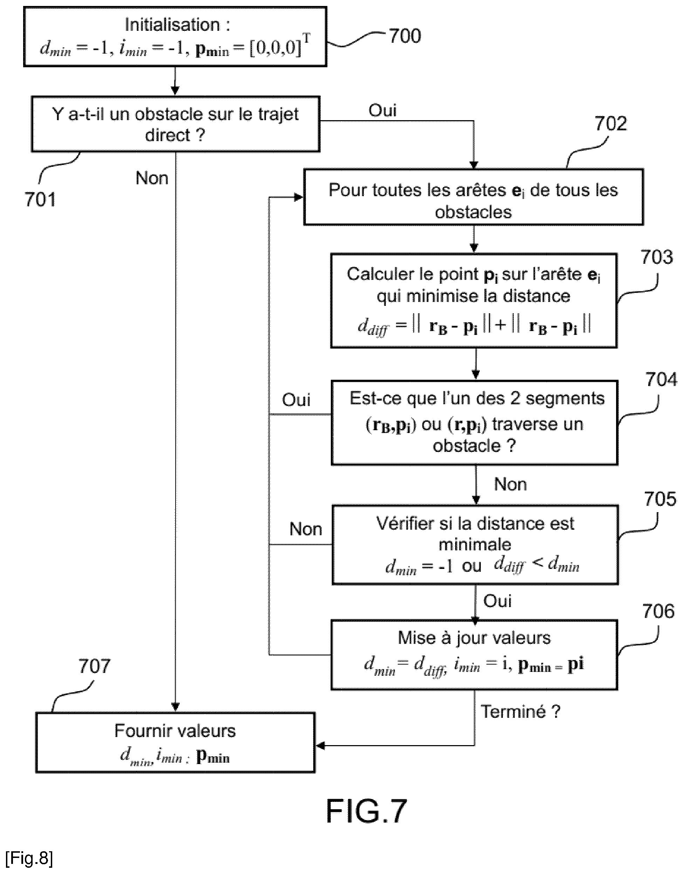

La figure 7 représente un organigramme d'un exemple de méthode permettant de déterminer un trajet diffracté 602 associé à un couple (nœud mobile M, nœud de référence R) compte tenu de l'environnement cartographié dans une carte 3D.

A l'étape 700, les variables $d_{min}$ = -1, $i_{min}$ = -1, $p_{min}$=[0,0,0]$^T$ correspondant respectivement à la distance parcourue par le trajet diffracté, l'indice i du bâtiment sur lequel le signal est diffracté et le point de diffraction sur une arête du bâtiment, sont initialisées.

A l'étape 701, on détermine, via la carte 3D si au moins un obstacle est présent sur le trajet direct entre le nœud mobile de position r et le nœud de référence de position $r_B$.

S'il y a au moins un obstacle, on passe à l'étape 702 qui consiste à identifier toutes les arêtes $e_i$ de tous les obstacles présents dans la scène.

A l'étape 703, on calcule le point $p_i$ sur l'arête $e_i$ qui minimise la distance $d_{diff} = \|r_B - p_i\| + \|r - p_i\|$ où $\|\,\|$ désigne la norme d'un vecteur.

A l'étape 704, on détecte si l'un des deux segments [$r_B$, $p_i$] ou [r, $p_i$] traverse un obstacle, si c'est le cas, ce trajet n'est pas pris en compte, sinon on passe à l'étape suivante.

A l'étape 705, on vérifie si la distance $d_{diff}$ calculée est plus petite que la valeur de distance sauvegardée $d_{min}$, si non on reboucle à l'étape 702 pour passer à l'arête suivante, si oui on passe à l'étape 706 pour sauvegarder les valeurs courantes : $d_{min}$= $d_{diff}$, $i_{min}$ = i, $p_{min}$= pi

On reboucle à l'étape 702 tant que toutes les arêtes de tous les obstacles n'ont pas été vérifiées puis on passe à l'étape finale 707 pour fournir en sortie les valeurs $d_{min}$= $d_{diff}$, $i_{min}$ = i, $p_{min}$= pi .

Dans une variante de réalisation, les itérations des étapes 702 à 706 sont limitées aux arêtes des obstacles se situant respectivement dans une première zone spatiale prédéfinie incluant l'émetteur et dans une seconde zone spatiale prédéfinie incuant le récepteur. Cette variante présente l'avantage de réduire le cout de calcul de l'algorithme en prenant comme hypothèse que les réflexions/diffractions/obstructions via des obstacles éloignés de l'émetteur ou du récepteur sont moins probables que celles issus d'obstacles environnants proches des deux nœuds.

A partir de ces valeurs, on peut ensuite calculer la différence entre la distance $d_{min}$ du trajet diffracté retenu et la distance $\|r_B - r\|$ du trajet direct. On peut également calculer l'angle diffracté à partir des coordonnées respectives des points $r_B$, r et $p_i$.

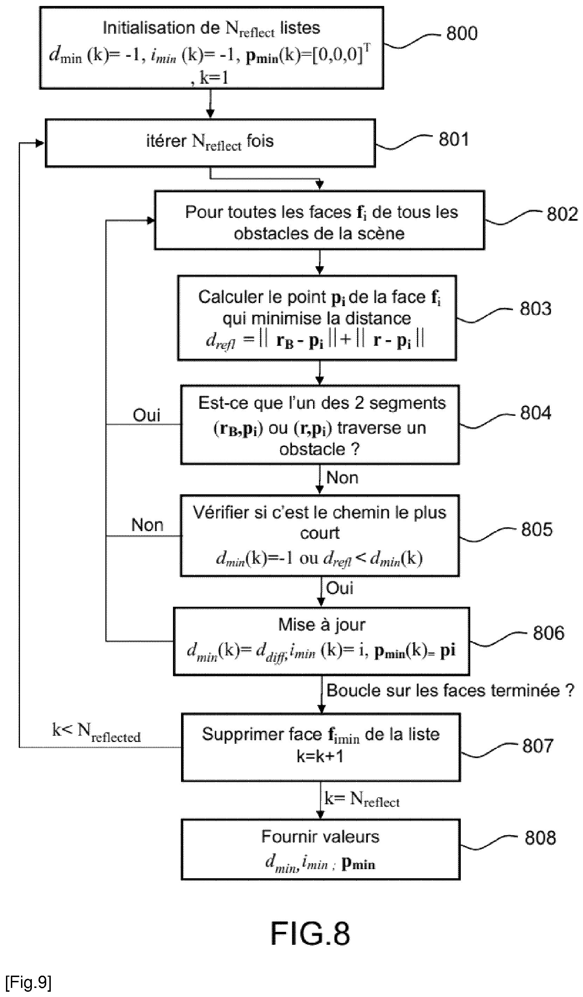

La figure 8 illustre un exemple de méthode pour déterminer un trajet réfléchi 603 associé à un couple (nœud mobile M, nœud de référence R) compte tenu de l'environnement cartographié dans une carte 3D.

A l'étape 800, on initialise les variables $d_{min}$ (k)= -1, $i_{min}$ (k)= -1, $p_{min}$(k)=[0,0,0]$^T$, k=1

L'indice k varie de 1 à $N_{reflect}$ qui est égal au nombre de trajets réfléchis que l'on souhaite modéliser. Ce nombre est par exemple égal à 2. C'est un paramètre de la méthode.

A l'étape 801, on itère $N_{reflect}$ fois les étapes suivantes.

A l'étape 802, on détermine toutes les faces $f_i$ de tous les obstacles de la scène.

A l'étape 803, on détermine le point $p_i$ sur la face $f_i$ qui minimise la distance $d_{refl} = \|r_B - p_i\| + \|r - p_i\|$ où $\|\,\|$ désigne la norme d'un vecteur.

A l'étape 804, on détecte si l'un des deux segments [$r_B$, $p_i$] ou [r, $p_i$] traverse un obstacle, si c'est le cas, ce trajet n'est pas pris en compte, sinon on passe à l'étape suivante.

A l'étape 805, on vérifie si la distance $d_{refl}$ calculée est plus petite que la valeur de distance sauvegardée $d_{min}(k)$, si non on reboucle à l'étape 802 pour passer à la face suivante, si oui on passe à l'étape 806 pour sauvegarder les valeurs courantes : $d_{min}$(k)= $d_{diff}$, $i_{min}$ (k)= i, $p_{min}$(k)= pi

On reboucle à l'étape 802 tant que toutes les faces de tous les obstacles n'ont pas été vérifiés puis on passe à l'étape 807 où la face $f_{imin}$ est supprimée de la liste des faces et on reboucle à l'étape 801 tant que k n'a pas atteint $N_{reflect}$.

Enfin à l'étape 808 finale on fournit les sorties $d_{min}$, $i_{min}$ ; $p_{min}$

A partir de ces valeurs, on peut ensuite calculer la différence entre la distance $d_{min}$ de chaque trajet réfléchi et la distance $\|r_B - r\|$ du trajet direct. On peut également calculer l'angle de réflexion à partir des coordonnées respectives des points $r_B$, r et $p_i$.

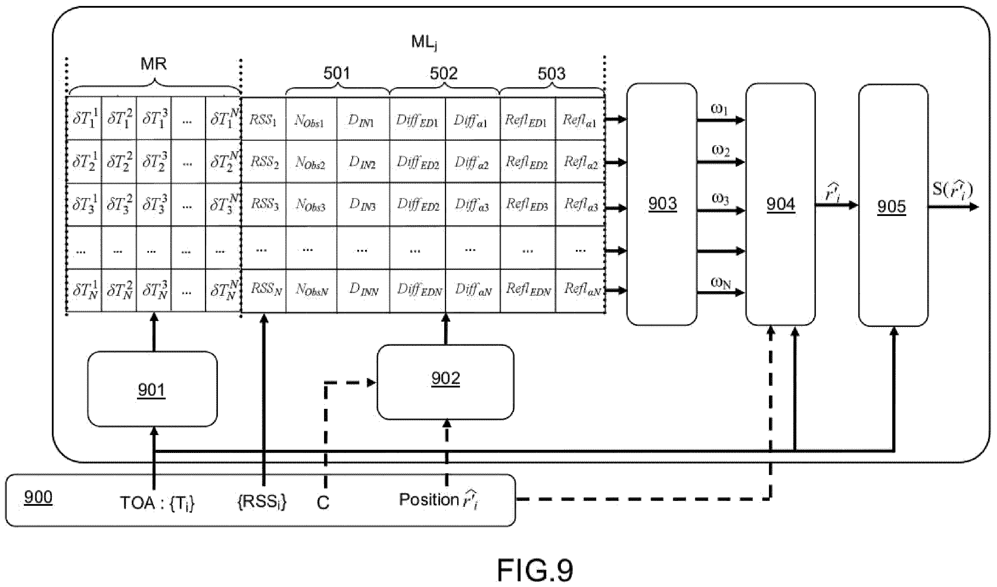

La figure 9 représente un organigramme d'une méthode, selon un mode de réalisation de l'invention, de localisation d'un nœud mobile, assistée par le modèle d'intelligence artificielle entrainé au moyen de la méthode décrite à la figure 3.

La méthode débute par une étape 900 de réception d'un ensemble de mesures de temps de vol {$T_i$} (ou de

pseudo-distances) pour i variant de 1 à N où N est le nombre de nœuds de références (stations de base dans le cas d'un réseau terrestre). Chaque mesure est caractéristique du temps de vol entre un même nœud mobile à localiser et un des nœuds de référence.

Optionnellement, la méthode reçoit également en entrée une information de qualité de chaque lien radio $RSS_i$.

Elle reçoit également une carte C en trois dimensions de l'environnement du réseau de communications ainsi qu'un ensemble d'hypothèses de positions $\bar{r}_k$ qui sont par exemple des positions prédéfinies sur une grille de résolution donnée de la carte C. Autrement dit, la carte C est décomposée en cellules, chaque cellule étant associée à une hypothèse de position.

A l'étape 901, on calcule, à partir des mesures de temps de vol, le premier ensemble de métriques conjointes MR sous la forme d'une matrice de résidus telle qu'illustrée à la figure 4.

Chaque résidu est calculé de la façon décrite ci-dessus pour construire la matrice ML.

A l'étape 902, on détermine le second ensemble de métriques de lien ML à partir de la carte C et de chaque hypothèse de position $\bar{r}_k$.

Les métriques 501,502,503 sont calculées de la façon décrite précédemment à l'appui de la figure 5 pour chaque hypothèse de position. Autrement dit on obtient plusieurs seconds ensembles de métriques de lien $ML_j$.

Dans une variante de réalisation, le second ensemble de métriques comprend en outre d'autres métriques tels que des métriques caractérisant le rapport signal à bruit du lien ou encore l'angle d'élévation.

Pour chaque hypothèse de position $\bar{r}_k$, le premier ensemble de métriques MR et le second ensemble de métriques $ML_j$ sont fournis en entrée du modèle d'intelligence artificielle entrainé lors de la phase d'entrainement.

L'étape 903 consiste à exécuter une phase d'inférence du modèle à partir desdites métriques. Le modèle fourni en sortie un ensemble de coefficients de pondération $\omega_1, ... \omega_N$ optimaux.

A l'étape 904, on calcule une nouvelle solution de positionnement en recherchant les coordonnées de la position qui minimisent la fonction suivante :

$$\hat{r}_k(x, y, z) = \arg\min_{x,y,z} \sum_{i=1}^{N} \omega_i \delta T_i(X)^2 \tag{16}$$

$\delta T_i(X)$ est le résidu calculé en faisant la différence entre la mesure de temps de vol $T_i$ et le temps de vol théorique parcouru par le signal entre le nœud de position $\hat{r}_k$ et le nœud de référence d'indice i de position connue.

Les étapes 903 et 904 sont exécutées pour chaque hypothèse de position $\bar{r}_k$ associées à la carte C.

Enfin à l'étape 905, on calcule, pour chaque couple (hypothèse de position $\bar{r}_k$, position calculée $\hat{r}_k$), un score de cohérence.

Le score est par exemple égal à :

$$Score_k = p_{\bar{r}_k}\left(\hat{r}_k, \hat{t}_{0,k}, T_1, ..., T_N\right) + (\hat{r}_k - \bar{r}_k)^T P_0^{-1}(\hat{r}_k - \bar{r}_k) \tag{17}$$

*avec*

$$p_{\bar{r}_k}\left(\hat{r}_k, \hat{t}_{0,k}, T_1, ..., T_N\right) = \sum_{i=1}^{N} \omega_i \delta T_i(X)^2 = \sum_{i=1}^{N} \omega_i (T_i - h(\hat{r}_k, \hat{t}_{0,k}, r_i))^2$$

$\hat{t}_{0,k}$ est l'erreur de synchronisation qui est aussi obtenue par résolution de l'équation (16).

$P_0$ est une matrice 3x3 qui est utilisée pour prendre en compte les tolérances d'erreur entre les positions testées $\bar{r}_k$ et les positions calculées $\hat{r}_k$.

Par exemple,

$$P_0 = \begin{bmatrix} \sigma_x^2 & 0 & 0 \\ 0 & \sigma_y^2 & 0 \\ 0 & 0 & \sigma_z^2 \end{bmatrix}$$

Les coefficients $\sigma_x$, $\sigma_y$ et $\sigma_z$ sont fixés à des valeurs qui traduisent les marges d'erreurs sur les trois coordonnées.

Par exemple, $\sigma_x$ = 1m, $\sigma_y$ = 2m et $\sigma_z$ = 3m.

Si la différence entre les deux positions (testée et calculée) est inférieure à ces tolérances, cela entraine un score élevé, sinon le score décroit en fonction de l'erreur.

Une fois que tous les scores $Score_k$ sont calculés, la position finale du nœud mobile est déterminée à partir des scores calculés, par exemple en sélectionnant la position testée qui fournit le score le plus élevé ou en effectuant la moyenne des positions pondérées par les scores via la formule suivante :

$$\hat{r} = \frac{1}{\sum_{k=1}^{K} Score_k} \sum_{k=1}^{K} Score_k . \bar{r}_k \ ,$$

avec K le nombre de positions testées sur la carte.

La méthode de localisation selon l'invention peut être exécutée dans un processeur de calcul d'un récepteur radio ou d'un récepteur de radionavigation par satellite embarqué dans le nœud mobile à localiser.

Alternativement, la méthode de localisation peut être exécutée dans un serveur distant à partir de mesures réalisées par ledit récepteur puis transmises vers ce serveur.

De façon générale, les méthodes d'apprentissage et de localisation selon l'invention peuvent être mises en œuvre à l'aide de composants matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux ou en tant que processeur de signal numérique DSP et/ou en tant que processeur graphique GPU, et/ou en tant que microcontrôleur et/ou en tant que processeur général par exemple.

L'invention est particulièrement adaptée aux mesures de temps de vol sur des distances relativement importantes (typiquement supérieures à 100 mètres), ce qui concerne les réseaux de type LPWAN (Low Power Wide Area Network, ou réseau faible consommation longue portée en français), tel que le réseau LoRaWAN, ou encore les systèmes de radionavigation par satellite (GPS, Galileo) ou les réseaux cellulaires de type 4G/5G.

**Revendications**

1. Méthode, mise en œuvre par ordinateur, d'apprentissage d'un modèle d'intelligence artificielle destiné à être utilisé pour déterminer une position d'un nœud mobile dans une zone donnée, la méthode comprenant les étapes de :

   - Recevoir (302) un ensemble de données d'apprentissage comprenant plusieurs ensembles de mesures radiofréquence correspondant à des signaux échangés respectivement entre un nœud mobile de position connue et plusieurs nœuds de référence de positions connues et une carte 3D représentative de l'environnement du nœud mobile et des nœuds de référence,
   - Déterminer, pour chaque ensemble de mesures, un ensemble de métriques comprenant au moins un premier ensemble (MR) de résidus calculés pour plusieurs sous-ensembles de mesures excluant chacun au moins une mesure de l'ensemble et un second ensemble (ML) d'indicateurs des trajets de propagation radio entre le nœud mobile et chaque nœud de référence tenant compte des obstacles de l'environnement représentés dans la carte 3D,
   - Pour chaque ensemble de mesures,

      i. Déterminer (304) un ensemble de coefficients de pondération de référence,
      ii. Entrainer (303,305) le modèle d'intelligence artificielle à produire un ensemble de coefficients de pondération à partir des ensembles de métriques des données d'apprentissage, de manière à minimiser une distance entre lesdits coefficients de pondération et les coefficients de pondération de référence,

   - les coefficients de pondération étant destinés à pondérer un ensemble de résidus, égaux à une différence entre une mesure et une information de positionnement prédite, lors d'un calcul de prédiction d'une information de positionnement par minimisation de la somme des résidus élevés au carré et pondérés par les coefficients de pondération.

2. Méthode d'apprentissage d'un modèle d'intelligence artificielle selon la revendication 1 dans laquelle chaque coefficient de pondération de référence est fonction d'un résidu calculé à partir de chaque mesure radiofréquence et des distances ou temps de vol entre le nœud mobile et chaque nœud de référence.

3. Méthode d'apprentissage d'un modèle d'intelligence artificielle selon l'une quelconque des revendications précédentes dans laquelle le modèle d'intelligence artificielle est un réseau de neurones artificiels, par exemple un réseau de neurones récurrents.

4. Méthode de localisation d'un nœud mobile dans une zone donnée comprenant les étapes de :

- Recevoir un ensemble de N mesures radiofréquence correspondant à des signaux échangés respectivement entre un nœud mobile à localiser et N nœuds de références de positions connues dans la zone, N étant un entier au moins égal à 4,
- Recevoir une carte 3D représentative de ladite zone,
- Déterminer (901), à partir des mesures reçues, un premier ensemble de résidus (MR) calculés pour plusieurs sous-ensembles de mesures comprenant chacun au plus N-1 mesures,
- Pour une pluralité de positions données de la carte,

  i. Déterminer (902), à partir de la carte 3D, un second ensemble (ML) d'indicateurs des trajets de propagation radio entre ladite position de la carte et la position de chaque nœud de référence, tenant compte des obstacles de l'environnement représentés dans la carte 3D,
  ii. Exécuter (903) une phase d'inférence du modèle d'intelligence artificielle entrainé au moyen de la méthode d'apprentissage selon l'une quelconque des revendications précédentes, à partir du premier et second ensemble pour déterminer un ensemble de coefficients de pondération,
  iii. Déterminer (904) une position provisoire du nœud mobile à partir desdites mesures et des coefficients de pondération en recherchant la valeur de la position qui minimise la somme des résidus élevés au carré, associés aux N mesures, et pondérés par les coefficients de pondération,
  iv. Calculer (905) un score de cohérence entre la position provisoire et la position donnée de la carte, et

- Déterminer la position finale du nœud mobile en fonction du score de cohérence.

5. Méthode de localisation d'un nœud mobile selon la revendication 4 dans laquelle le score de cohérence est calculé à partir de la somme des résidus élevés au carré, associés aux N mesures, et pondérés par les coefficients de pondération, les résidus étant calculés pour la position provisoire.

6. Méthode de localisation d'un nœud mobile selon l'une des revendications 4 ou 5 dans laquelle la position finale du nœud mobile est la position de la carte qui donne le score de cohérence le plus élevé ou qui est égale à une moyenne des positions de la carte pondérées par leurs scores de cohérence respectifs.

7. Méthode selon l'une quelconque des revendications précédentes dans laquelle le second ensemble (ML) d'indicateurs des trajets de propagation radio comprend au moins un indicateur parmi un indicateur de trajet direct, un indicateur de trajet diffracté et un indicateur de trajet réfléchi.

8. Méthode selon la revendication 7 dans laquelle l'au moins un indicateur de trajet direct est pris parmi un indicateur du nombre de bâtiments interceptés par le trajet ou un indicateur de la distance totale parcourue par le signal à l'intérieur des bâtiments traversés.

9. Méthode selon la revendication 7 dans laquelle l'au moins un indicateur de trajet diffracté est pris parmi un indicateur de la distance supplémentaire parcourue pour le trajet diffracté par rapport au trajet direct ou un indicateur de l'angle de diffraction.

10. Méthode selon la revendication 9 comprenant la détermination du trajet diffracté comme étant le trajet de distance minimum interceptant une arête d'un obstacle parmi l'ensemble des obstacles présents sur la carte 3D.

11. Méthode selon la revendication 7 dans laquelle l'au moins un indicateur de trajet réfléchi est pris parmi un indicateur de la distance supplémentaire parcourue pour le trajet réfléchi par rapport au trajet direct ou un indicateur de l'angle de réflexion.

12. Méthode selon la revendication 11 comprenant la détermination du trajet réfléchi comme étant le trajet de distance minimum réfléchi sur une face d'un obstacle parmi l'ensemble des obstacles présents sur la carte 3D.

13. Méthode selon l'une quelconque des revendications précédentes dans laquelle la mesure radiofréquence est une mesure de temps de vol et un résidu est calculé comme la différence entre la mesure et le temps de vol théorique entre la position du nœud mobile et la position d'un nœud de référence ou la mesure radiofréquence est une mesure de distance et un résidu est calculé comme la différence entre la mesure et la distance entre le nœud mobile et le nœud de référence.

14. Méthode selon l'une quelconque des revendications précédentes dans laquelle les mesures radiofréquence sont des mesures de radionavigation par satellite et les nœuds de référence sont des satellites ou les nœuds de référence sont des stations terrestres.

15. Système de localisation d'un nœud mobile comprenant une unité de traitement configurée pour exécuter les étapes de la méthode de localisation selon l'une des revendications 5 à 14.

16. Programme d'ordinateur comportant des instructions pour l'exécution de la méthode selon l'une quelconque des revendications 1 à 14, lorsque le programme est exécuté par un processeur.

17. Support d'enregistrement lisible par un processeur sur lequel est enregistré un programme comportant des instructions pour l'exécution de la méthode selon l'une quelconque des revendications 1 à 14, lorsque le programme est exécuté par un processeur.

[Fig. 1]

**FIG.1**

[Fig. 2]

**FIG.2**

[Fig. 3]

[Fig. 4]

301 → 1) Initialisation d'un algorithme $f()$

$$\{\omega_i\} = f(\{\rho_i\}, \{v_u\})$$

302 → 2.1) Constitution d'une base de données Génération de plusieurs ensembles de mesures $\{\{\rho_i\}^k\}_{k=1,,K}$ chacun d'eux étant associé à une solution $X_k^{ref}$

$\{\{\rho_i\}^k, X_k^{ref}\}_{k=1,,K}$

303 → 2.2) Pour chaque ensemble $\{\{\rho_i\}^k$, calcul des sorties

$$\{\omega_i\}^k = f(\{\rho_i\}^k, \{v_u\})$$

304 → 2.3) Calcul des poids de référence (aka labels) $\{\omega_i^{ref}\}^k$

$\{\omega_i\}^k$

$\{\omega_i^{ref}\}^k$

305 → 2.4) Mise à jour des paramètres $\{v_u\}$ en fonction

- des poids calculés : $\{\omega_i\}^k$

- des poids de référence : $\{\omega_i^{ref}\}^k$

$\{v_u\}_u = 1:P$

FIG.3

EP 4 715 416 A1

18

Résidu pour le nœud de référence 2    Résidu pour le nœud de référence N

MR

| $\delta T_1^1$ | $\delta T_1^2$ | $\delta T_1^3$ | ... | $\delta T_1^N$ |
| $\delta T_2^1$ | $\delta T_2^2$ | $\delta T_2^3$ | ... | $\delta T_2^N$ |
| $\delta T_3^1$ | $\delta T_3^2$ | $\delta T_3^3$ | ... | $\delta T_3^N$ |
| ... | ... | ... | ... | ... |
| $\delta T_N^1$ | $\delta T_N^2$ | $\delta T_N^3$ | ... | $\delta T_N^N$ |

Exclusion du nœud de référence 1

Exclusion du nœud de référence N

# FIG.4

[Fig.5]

ML

|  | 501 | | 502 | | 503 | |
| --- | --- | --- | --- | --- | --- | --- |
| $RSS_1$ | $N_{Obs1}$ | $D_{IN1}$ | $Diff_{ED1}$ | $Diff_{\alpha1}$ | $Refl_{ED1}$ | $Refl_{\alpha1}$ |
| $RSS_2$ | $N_{Obs2}$ | $D_{IN2}$ | $Diff_{ED2}$ | $Diff_{\alpha2}$ | $Refl_{ED2}$ | $Refl_{\alpha2}$ |
| $RSS_3$ | $N_{Obs3}$ | $D_{IN3}$ | $Diff_{ED2}$ | $Diff_{\alpha3}$ | $Refl_{ED3}$ | $Refl_{\alpha3}$ |
| ... | ... | ... | ... | ... | ... | ... |
| $RSS_N$ | $N_{ObsN}$ | $D_{INN}$ | $Diff_{EDN}$ | $Diff_{\alphaN}$ | $Refl_{EDN}$ | $Refl_{\alphaN}$ |

# FIG.5

[Fig.6]

602

603

M

601

B₁

B₂

R

FIG.6

[Fig.7]

Initialisation :
$d_{min} = -1$, $i_{min} = -1$, $\mathbf{p_{min}} = [0,0,0]^T$ — 700

Y a-t-il un obstacle sur le trajet direct ?

701

Non

Oui

Pour toutes les arêtes $\mathbf{e_i}$ de tous les obstacles — 702

Calculer le point $\mathbf{p_i}$ sur l'arête $\mathbf{e_i}$ qui minimise la distance
$$d_{diff} = \| \mathbf{r_B} - \mathbf{p_i} \| + \| \mathbf{r_B} - \mathbf{p_i} \|$$
703

Est-ce que l'un des 2 segments $(\mathbf{r_B,p_i})$ ou $(\mathbf{r,p_i})$ traverse un obstacle ? — 704

Oui

Non

Non

Vérifier si la distance est minimale
$d_{min} = -1$ ou $d_{diff} < d_{min}$ — 705

Oui

Mise à jour valeurs
$d_{min} = d_{diff}$, $i_{min} = i$, $\mathbf{p_{min}} = \mathbf{pi}$ — 706

Terminé ?

707

Fournir valeurs
$d_{min}, i_{min} ; \mathbf{p_{min}}$

# FIG.7

[Fig.8]

Initialisation de $N_{reflect}$ listes
$d_{\min}(k)= -1$, $i_{min}(k)= -1$, $\mathbf{p_{min}}(k)=[0,0,0]^{T}$
, $k=1$ ⟶ 800

itérer $N_{reflect}$ fois ⟶ 801

Pour toutes les faces $\mathbf{f}_i$ de tous les obstacles de la scène ⟶ 802

Calculer le point $\mathbf{p}_i$ de la face $\mathbf{f}_i$ qui minimise la distance
$d_{refl} = \| \mathbf{r_B} - \mathbf{p_i} \| + \| \mathbf{r} - \mathbf{p_i} \|$ ⟶ 803

Est-ce que l'un des 2 segments $(\mathbf{r_B}, \mathbf{p_i})$ ou $(\mathbf{r}, \mathbf{p_i})$ traverse un obstacle ? ⟶ 804

Oui

Non

Vérifier si c'est le chemin le plus court
$d_{min}(k)=-1$ ou $d_{refl} < d_{min}(k)$ ⟶ 805

Non

Oui

Mise à jour
$d_{min}(k)= d_{diff}$, $i_{min}(k) = i$, $\mathbf{p_{min}}(k)= \mathbf{pi}$ ⟶ 806

Boucle sur les faces terminée ?

$k< N_{reflected}$

Supprimer face $\mathbf{f}_{imin}$ de la liste
$k=k+1$ ⟶ 807

$k= N_{reflect}$

Fournir valeurs
$d_{min}$, $i_{min}$ ; $\mathbf{p_{min}}$ ⟶ 808

# FIG.8

[Fig.9]

FIG.9

Europäisches Patentamt

European Patent Office

Office européen des brevets

**RAPPORT DE RECHERCHE EUROPEENNE**

Numéro de la demande

EP 25 20 0708

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SUZUKI TARO ET AL: "NLOS Multipath Detection using Convolutional Neural Network", GNSS 2020 - PROCEEDINGS OF THE 33RD INTERNATIONAL TECHNICAL MEETING OF THE SATELLITE DIVISION OF THE INSTITUTE OF NAVIGATION (ION GNSS+ 2020), THE INSTITUTE OF NAVIGATION, 8551 RIXLEW LANE SUITE 360 MANASSAS, VA 20109, USA, 25 septembre 2020 (2020-09-25), pages 2989-3000, XP056016217, * abrégé, chapitres: "introduction", "proposed CNN architecture" et "weighting of GNSS observations based on classification results" * ----- | 1-17 | INV. G01S5/02 |
| A | US 2023/057518 A1 (CHEN PO-YU [TW] ET AL) 23 février 2023 (2023-02-23) * abrégé; fig. 1, 3, 5; alinéas 2-4, 1-33, 39 * ----- | 1-17 | |
| A | DE SOUSA MARCELO N ET AL: "Mobile Station Localization Emitter in Urban NLoS using Multipath Ray Tracing Fingerprints and Machine Learning", 2018 8TH INTERNATIONAL CONFERENCE ON LOCALIZATION AND GNSS (ICL-GNSS), IEEE, 26 juin 2018 (2018-06-26), pages 1-6, XP033390599, DOI: 10.1109/ICL-GNSS.2018.8440898 * le document en entier * ----- | 1-17 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 28 janvier 2026 | González Moreno, J |

EPO FORM 1503 03.82 (P04C02)

# EP 4 715 416 A1

**ANNEXE AU RAPPORT DE RECHERCHE EUROPEENNE**
**RELATIF A LA DEMANDE DE BREVET EUROPEEN NO.**

EP 25 20 0708

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-01-2026

| Document brevet cité au rapport de recherche | Date de publication | Membre(s) de la famille de brevet(s) | Date de publication |
|---|---|---|---|
| US 2023057518 A1 | 23-02-2023 | CN 115714615 A | 24-02-2023 |
| | | TW 202309549 A | 01-03-2023 |
| | | US 2023057518 A1 | 23-02-2023 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3136065

- FR 2304055